# EUROPÄISCHE PATENTSCHRIFT

(11) **EP 3 326 892 B1**
(45) Veröffentlichungstag und Bekanntmachung des Hinweises auf die Patenterteilung: **25.09.2019**
(21) Anmeldenummer: 17203062.9
(22) Anmeldetag: 22.11.2017
(51) Int. Cl.: B62D 7/15, B62D 13/00, B62D 33/02, B62D 33/033, B62D 53/06, B62D 25/20, B62D 53/00

(54) **TRANSPORTANHÄNGER MIT EINEM FAHRWERK UND MINDESTENS EINER BODENPLATTFORM**
TRANSPORT TRAILER WITH RUNNING GEAR AND AT LEAST ONE FLOOR PLATFORM
REMORQUE DE TRANSPORT POURVUE DE CHÂSSIS ET D'AU MOINS UNE PLATE-FORME AU SOL

(30) Priorität: 24.11.2016 DE 102016122683
(43) Veröffentlichungstag der Anmeldung: 30.05.2018
(73) Patentinhaber: Jungheinrich Aktiengesellschaft, 22047 Hamburg (DE)
(72) Erfinder: Stockrahm, Hauke, 21339 Lüneburg (DE); Hak, Ralf, 21033 Hamburg (DE); Mensing, Jan-Christian, 21365 Adendorf (DE)
(74) Vertreter: Hauck Patentanwaltspartnerschaft mbB

(56) Entgegenhaltungen:
- EP-A1- 0 900 713
- EP-A1- 1 862 380
- EP-A2- 0 930 221
- CN-A- 105 501 278
- DE-B4-102011 007 943

## Beschreibung

Die vorliegende Erfindung betrifft einen Transportanhänger mit einem Fahrwerk und mindestens einer Bodenplattform.

Transportanhänger spielen eine wichtige Rolle bei der innerbetrieblichen Logistik. Mehrere Transportanhänger werden zu einem Schleppverband zusammengeschlossen, der von einem Schleppfahrzeug gezogen durch ein Lager oder einen Produktionsbereich fährt. Der Schleppverband wird gelegentlich auch als "Routenzug" bezeichnet, wenn für den Schleppverband eine Route festgelegt ist, die beispielsweise in einem festen Zyklus oder Turnus abgefahren wird. Zum Transport von Material, Teilen und Produkten sind in der Regel Innenwagen vorgesehen, die mit Rollen versehen eine Bewegung des Materials zulassen. Die Innenwagen können beispielsweise manuell geschoben werden, Paletten können auf einem flachen Innenwagen angeordnet werden.

Für den Transport des Innenwagens sind zahlreiche unterschiedliche Transportanhänger bekannt. Zunächst zu unterscheiden sind Transportanhänger, die von beiden Seiten einen Innenwagen aufnehmen können. Bei solchen Transportanhängern handelt es sich in der Regel um Portalanhänger, bei denen ein den Aufnahmeraum für den Innenwagen überspannendes Portal vorgesehen ist. Andere Transportanhänger, wie beispielsweise ein E- oder C-Rahmen sind nur von einer Seite mit dem Innenwagen beladbar. Ein weiteres wichtiges Unterscheidungsmerkmal für die Transportanhänger ist, ob diese den Anhänger lediglich führen, sodass der Innenwagen mit seinen Rädern in Bodenkontakt bleibt, oder den Innenwagen so transportieren, dass die Räder des Innenwagens keinen Bodenkontakt haben. Bei letzterer Variante, bei der die Räder des Innenwagens keinen Bodenkontakt während des Transports besitzen, kann unterschieden werden zwischen Transportanhängern, die den Innenwagen aktiv anheben und Transportanhängern, bei denen der Innenwagen manuell in den Transportraum eingeschoben und über eine Rampe angehoben wird.

Aus DE 10 2011 007 943 B4 ist ein Anhängerfahrzeug bekannt, das zum Ankuppeln an ein Zugfahrzeug eingerichtet ist. Das Anhängerfahrzeug weist eine jeweils als Lenkachse mit einer Achsschenkellenkung ausgebildet Vorder- und Hinterachse auf, wobei die Vorderachse selbstständig eine Lenkbewegung ausführt und die Lenkung der Hinterachse mit der Achsschenkellenkung der Vorderachse gekoppelt ist. Zwischen Vorderachse und Hinterachse befindet sich ein Aufnahmeraum, der eine bodennah angeordnete Bodenplatte besitzt. Ferner ist ein Portalbogen vorgesehen, der an Vorder- und Hinterachse angreifende Zugkräfte gemeinsam mit der Bodenplattform überträgt. Nachteilig an dem bekannten Anhängefahrzeug ist, dass eine große Kraftanstrengung zum Aufschieben des Innenwagens auf die Bodenplattform erforderlich ist.

Aus EP 1 792 027 B1 ist eine verstärkte Sandwich-Platte bekannt geworden, bei der geschäumtes Metallmaterial als Kern für eine Sandwich-Struktur vorgesehen ist, die durch faserförmiges Verstärkungsmaterial zusätzlich verstärkt wird. Ebenfalls wird vorgeschlagen, dass die verstärkte Sandwich-Struktur als Bodenstruktur für einen Anhänger, ein Brückendeck, eine Dachkonstruktion, ein Parkdeck, einen Flugzeugflügel oder ein sonstiges konstruktives Bauteil vorgesehen werden kann.

Der Erfindung liegt die Aufgabe zugrunde, einen Transportanhänger bereit zu stellen, bei dem ein Innenwagen mit möglichst geringem Kraftaufwand auf die Bodenplattform gestellt werden kann.

Erfindungsgemäß wird die Aufgabe durch einen Transportanhänger mit den Merkmalen aus Anspruch 1 gelöst. Die Unteransprüche betreffen bevorzugte Ausführungsformen.

Der erfindungsgemäße Transportanhänger besitzt ein Fahrwerk und mindestens eine Bodenplattform. Die Bodenplattform ist dazu vorgesehen und bestimmt, um auf ihr mindestens einen zu transportierenden Innenwagen abzustellen. Erfindungsgemäß besteht die Bodenplatte aus einer Hauptplatte, die aus einem porösen metallischen Werkstoff und einem mit der Hauptplatte verbundenen Blech hergestellt ist. Die erfindungsgemäß vorgesehene Bodenplattform besitzt den Vorteil, dass sie bei geringem Gewicht eine große Steifigkeit besitzt. Der Erfindung liegt die Erkenntnis zugrunde, dass bei herkömmlichen Bodenplattformen, die einen Innenwagen mit seiner Last aufnehmen können, ausreichend Bodenfreiheit vorgesehen werden musste, um auch beim beladenen Transportanhänger dessen Bodenplattform sich durchbiegt, ausreichend Bodenfreiheit zu besitzen. Durch die große Bodenfreiheit des Transportanhängers im unbeladenen Zustand ergab sich die Schwierigkeit, dass ein voll beladener Innenwagen auf die Bodenplattform nur unter großem Kraftaufwand aufgeschoben werden kann. Bei der erfindungsgemäßen Bodenplattform wird insbesondere durch die Verwendung eines porösen metallischen Werkstoffs eine große Steifigkeit erzielt, sodass diese mit einer niedrigeren Bodenfreiheit als bei herkömmlichen Fahrzeugen angeordnet werden kann, wodurch auch die Arbeit für das Aufschieben eines vollbeladenen Innenwagens auf die Bodenplattform erleichtert ist. Hinzu kommt, dass die erfindungsgemäß vorgesehene Bodenplattform ein geringeres Gewicht als eine herkömmliche Bodenplattform mit zusätzlichen Versteifungsprofilen besitzt, wodurch der Transportanhänger insgesamt leichter und besser zu handhaben ist.

In einer bevorzugten Ausgestaltung ist ein vierrädriges Fahrwerk mit einem vorderen und einem hinteren Anhängerabschnitt vorgesehen. Die Bodenplattform ist zwischen dem vorderen und dem hinteren Anhängerabschnitt vorgesehen, wobei vorderer und hinterer Anhängerabschnitt zusätzlich noch über mindestens einen Portalbogen miteinander verbunden sind.

In einer bevorzugten Ausgestaltung ist mindestens ein um eine Anhängerlängsachse schwenkbar gelagertes Rampenelement vorgesehen, das in einer hochgestellten Position die Bodenplattform seitlich begrenzt und in einer heruntergeklappten Position eine Auffahrrampe für die Bodenplattform bildet. Das Rampenelement kann wie auch die Bodenplattform aus einem porösen metallischen Werkstoff in Verbindung mit einer Abdeckplatte hergestellt sein.

In einer weiter bevorzugten Ausgestaltung weist die Bodenplattform zwei mit der Hauptplatte verbundene Bleche auf, zwischen denen die Hauptplatte angeordnet ist. Die Bodenplattform besitzt damit eine Sandwich-Bauweise, bei der der poröse metallische Werkstoff im Inneren zwischen zwei Blechen angeordnet ist. Aus Gründen der Stabilität ist die Hauptplatte aus einem geschlossenporigen Schaum hergestellt. Bevorzugt wird ein geschlossenporiger Aluminiumschaum eingesetzt.

In einer bevorzugten Ausgestaltung bedecken das oder die Bleche eine Flachseite der Hauptplatte vollständig. Durch das vollständige Bedecken der Hauptplatte mit ihrem porösen Material kann eine glatte Oberfläche geschaffen werden.

Die von der Bodenplattform vorgesehene Dicke ist abhängig von der maximal zulässigen Last, die von der Bodenplattform aufgenommen werden kann. Hierbei hat sich herausgestellt, dass eine Dicke von weniger als 70 mm, vorzugsweise von weniger als 60 mm, besonders bevorzugt von weniger als 50 mm, für die Aufnahme von üblichen Lasten ausreichend ist. Eine übliche Maximallast für einen solchen Transportanhänger ist beispielsweise 1.000 kg oder auch 1.500 kg.

Bei dem erfindungsgemäßen Transportanhänger besitzt die Bodenplattform eine oder mehrere elektrisch und/oder hydraulische Energieleitungen, die an den zu den Anhängerabschnitten weisenden Seiten der Bodenplattform Anschlüsse besitzen. Die Leitungen in der Hauptplatte sind innerhalb des porösen metallischen Werkstoffs ausgebildet. Die Energieleitungen können beispielsweise durch bereits eingelegte elektrische oder hydraulische Leitungen gebildet sein. Als Energieleitung kann auch ein einfacher Kanal durch die Hauptplatte verstanden werden, der zur Aufnahme von elektrischen oder hydraulischen Leitungen geeignet ist. In einer weiteren bevorzugten Ausgestaltung sind ein oder mehrere Kanäle der Bodenplattform vorgesehen, die an den zu den Anhängerabschnitten weisenden Seiten der Bodenplattform münden. Die Kanäle können ebenfalls elektrische Leitungen oder hydraulische Leitungen aufnehmen. Auch ist es möglich, eine mechanische Kopplung, beispielsweise über Züge, Stangen, Ketten oder dergleichen, durch diese Kanäle vorzunehmen.

Der besondere Vorteil von Energieleitungen und/oder Kanälen in der Bodenplattform ist, dass hier eine Kopplung von vorderen und hinteren Anhängerabschnitten geschützt innerhalb der Bodenplattform erfolgen kann.

In einer bevorzugten Ausgestaltung besitzt die Hauptplatte einen Rahmen aus miteinander verbundenen Profilen. Die Profile können sich beispielsweise in Längs- und in Querrichtung des Transportanhängers erstrecken. Als Längsrichtung wird dabei die Richtung der Verbindung zwischen den Anhängerabschnitten angesehen. Bevorzugt sind die sich in Längsrichtung zwischen den Anhängerabschnitten erstreckenden Profile als Hohlprofile ausgebildet. Möglich, dass zwischen zwei Hohlprofilen Querprofile angeordnet sind, die zusammen mit den Hohlprofilen in Längsrichtung den Rahmen bilden. Die sich in Längsrichtung erstreckenden Profile bilden jeweils einen Kanal, in dem elektrische und/oder hydraulische Energieleitungen zwischen den Anhängerabschnitten geführt werden können.

In einer ebenfalls bevorzugten Weiterbildung ist der Rahmen der Hauptplatte mit dem Blech der Hauptplatte verbunden und die Profile des Rahmens begrenzen mehrere Bereiche auf dem Blech. Die Bereiche werden mit dem porösen metallischen Werkstoff gefüllt, bevorzugt wird dieser in den Bereichen ausgeschäumt. Hierdurch entsteht eine besonders innige Verbindung zwischen dem porösen metallischen Werkstoff und dem Rahmen bzw. dem Blech der Hauptplatte. Der Rahmen wird bevorzugt auf beiden Seiten jeweils durch ein Blech abgedeckt, zwischen denen sich die Profile und das geschäumte Metallmaterial befinden.

In einer bevorzugten Ausgestaltung ist das Fahrwerk als Vierradlenkung ausgebildet. Hierbei sind die Räder an beiden Anhängerabschnitten lenkbar gelagert, wobei eine Lenkung an dem vorderen Anhängerabschnitt und an dem hinteren Anhängerabschnitt über Energieleitung und/oder die Kanäle miteinander gekoppelt sind. Die gekoppelte Vierradlenkung stellt eine ausreichende Spurtreue für den geschleppten Transportanhänger sicher, insbesondere auch, wenn mehrere Transportanhänger zu einem Schleppverbund zusammengeschlossen sind.

Eine bevorzugte Ausgestaltung des erfindungsgemäßen Transportanhängers wird nachfolgend näher erläutert. Es zeigen:
- Fig. 1: eine schematische Ansicht des Transportanhängers mit heruntergeklapptem Rampenelement,
- Fig. 2: das Fahrwerk des Transportanhängers mit Bodenplattform,
- Fig. 3: einen Schnitt durch die Bodenplattform,
- Fig. 4: eine perspektivische Ansicht der Hauptplatte mit Rahmen und Blech und
- Fig. 5: eine Sicht auf eine fertiggestellte Hauptplatte mit Kabelführungskanälen in Längsrichtung.

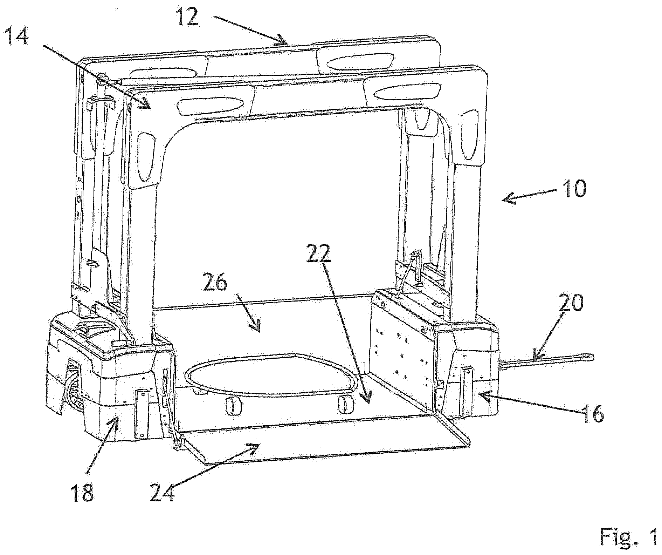

Figur 1 zeigt einen Transportanhänger 10, der zwei U-förmige Portalarme 12, 14 besitzt. Die Portalarme 12, 14 verbinden einen vorderen Anhängerabschnitt 16 mit einem hinteren Anhängerabschnitt 18. Der vordere Anhängerabschnitt 16 besitzt eine Zugdeichsel 20, der hintere Anhängerabschnitt 18 besitzt eine Anhängerkupplung (nicht dargestellt) zur Aufnahme einer Deichsel eines geschleppten Anhängers. Zwischen dem vorderen Anhängerabschnitt 16 und dem hinteren Anhängerabschnitt 18 befindet sich eine ebene Bodenplattform 22. Die Bodenplattform 22 besitzt eine sich über den gesamten Aufnahmebereich zwischen dem vorderen Anhängerabschnitt 16 und dem hinteren Anhängerabschnitt 18 erstreckenden ebenen Untergrund. Zusätzliche Profile oder Träger sind zwischen vorderem und hinterem Anhängerabschnitt nicht angeordnet. Die Kraftübertragung erfolgt nur über die Bodenplattform und den oder die Portalarme. Seitlich begrenzt ist die Bodenplattform 22 über zwei Rampenelemente 24 und 26. Das Rampenelement 24 ist in seiner heruntergeklappten Position dargestellt, in der es eine Auffahrrampe für einen Innenwagen (nicht dargestellt) bildet. Das Rampenelement 26 auf der gegenüberliegenden Längsseite des Transportanhängers ist in seiner hochgeklappten Position dargestellt. In dieser Position sichert das Rampenelement einen in den Transportwagen aufgenommenen Innenwagen gegen ein Herunterrollen von der Bodenplattform.

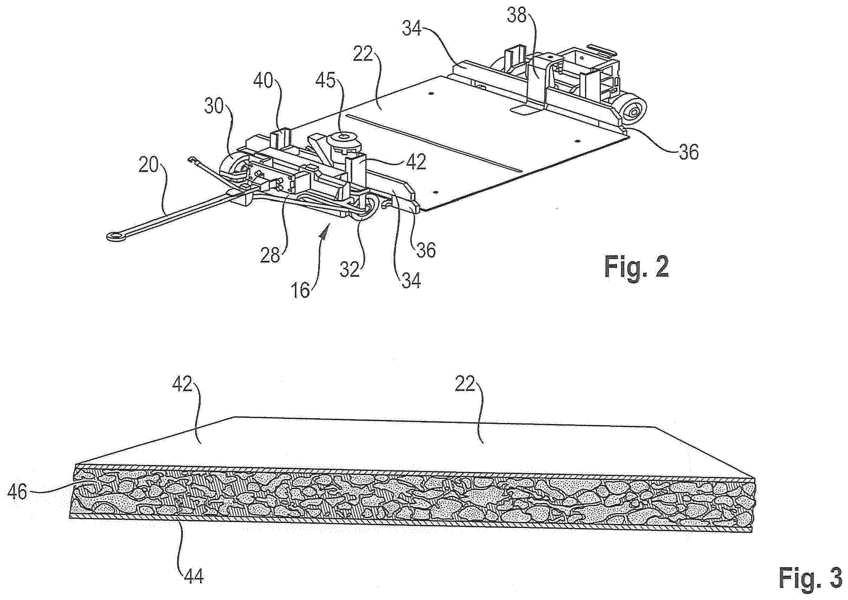

Figur 2 erläutert den näheren Aufbau des Fahrwerks sowie der Bodenplattform 22. Der vordere Anhängerabschnitt 16 besitzt eine Deichsel 20, die über eine Koppelstange mit einer Lenkung, bevorzugt einer Ackermann-Lenkung, verbunden ist. Der vordere Anhängerabschnitt 16 besitzt zwei seitlich angeordnete Räder 30, 32. An den Anhängerabschnitten ist jeweils ein Querprofil 34 angebracht. Die Querprofile 34 verfügen über abgewinkelte Befestigungsabschnitte 36, auf denen die Bodenplattform 22 ruht und verbunden ist. In der Fahrzeugmitte ist ein weiteres L-förmiges Befestigungsprofil 38 vorgesehen, das sowohl mit dem Querprofil 34 als auch mit der Bodenplattform 22 verbunden ist.

In Fig. 2 ist zusätzlich eine Hubeinrichtung an den vorderen und hinteren Anhängerabschnitt 16, 18 zu erkennen. Die Hubvorrichtung besitzt zwei beabstandet zueinander angeordnete vertikale Hubprofile 40, 42, zwischen denen ein Hubzylinder 44 angeordnet ist. Der Hubzylinder 44 hebt beispielsweise über die mittlere Befestigung 38 die Bodenplattform 22 an, wobei diese mit Hilfe des Querprofils 34 Führungsabschnitte für die Hubprofile besitzt.

Figur 3 zeigt in einer schematischen Ansicht einen Querschnitt durch die Bodenplattform 22. Die Bodenplattform besitzt zwei Metallbleche 42, 44 auf gegenüberliegenden Flachseiten des porösen Metallwerkstoffs 46. Die Bleche 42 und 44 können aus Aluminium oder Stahl bestehen. Der poröse Metallwerkstoff 46 kann beispielsweise aus einem geschlossenporigen Aluminiumschaum bestehen.

Praktische Versuche haben gezeigt, dass eine Last von 1.000 kg bei einer Bodenplattform von 1300 x 1100 mm sich in kompakter Bauweise bei einer Dicke von weniger als 50 mm gut erreichen lässt. Im Vergleich dazu würde eine Plattform aus Stahl bei einer Dicke von 55 mm nur eine Zuladung von 300 kg erlauben.

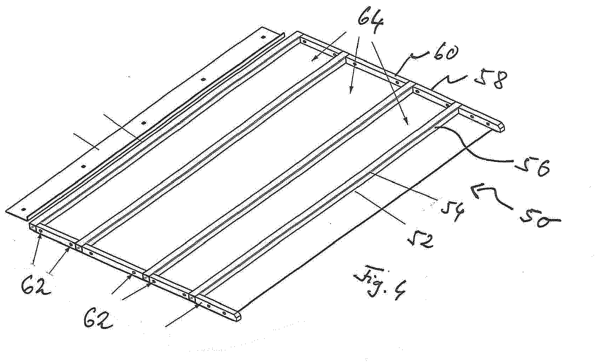

Fig. 4 zeigt eine Hauptplatte 50, die ein Blech 52 besitzt, auf dem ein Rahmen 54 angeordnet ist. Der Rahmen 54 besteht aus vier parallel zueinander angeordneten Längsprofilen 56, die über lange oder kurze Querprofile 58, 60 miteinander verbunden sind. Die Querprofile 58, 60 verlaufen endseitig an dem Blech 52, wobei die Querprofile 58, 60 mit Bohrungen 62 versehen sind, über die das Blech 52 und die Längsprofile 56 an den Querprofilen befestigt werden können. Zwischen den Längsprofilen 56 entstehen Bereiche 64, die rechteckig seitlich jeweils von einem Längsprofil und an Kopf- und Fußende jeweils durch ein Querprofil begrenzt sind. Jeder der Bereiche besitzt eine rechteckige Form und wird an einer Flachseite 52 durch das Bodenblech 52 begrenzt. Jeder der Bereiche wird mit dem metallischen Material ausgeschäumt. In der Regel wird hierzu das Material in den Bereich eingebracht und in dem Bereich durch ein zweites Abdeckblech vollständig verschlossen, bevor das Material als Schaum den Bereich 64 vollständig verschließt.

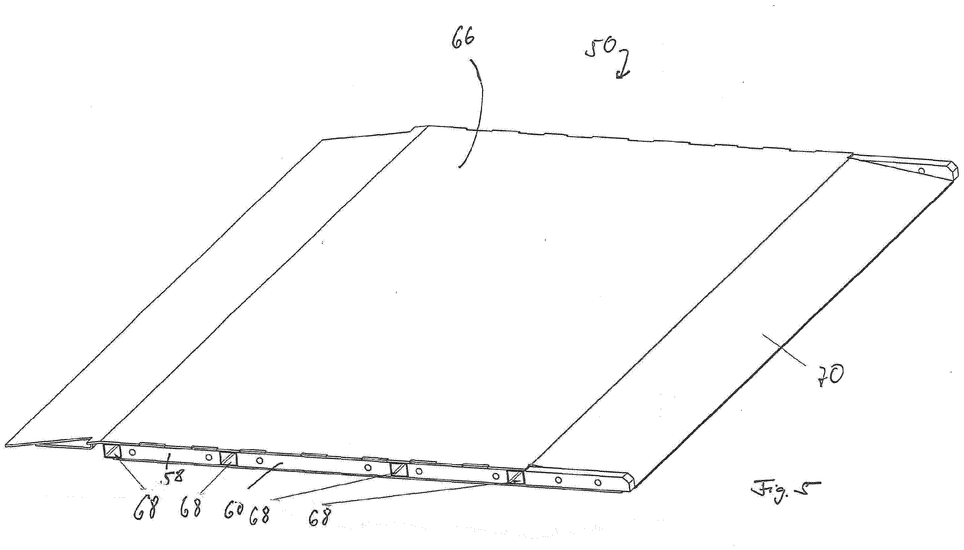

Fig. 5 zeigt die fertiggestellte Hauptplatte 50 mit einem Deckblech 66 auf der Oberseite. Entlang der Seite sind die Kabelführungskanäle 68, die von den Längsprofilen 56 gebildet sind. Seitlich zu dem Abdeckblech 66 sind rampenförmige Auffahrhilfen 70 vorgesehen.

### Bezugszeichenliste

- 10: Transportanhänger
- 12: Portalarme
- 14: Portalarme
- 16: vorderer Anhängerabschnitt
- 18: hinterer Anhängerabschnitt
- 20: Zugdeichsel
- 22: Bodenplattform
- 24: Rampenelement
- 26: Rampenelement
- 30: Rad
- 32: Rad
- 34: Querprofil
- 36: Befestigungsabschnitt
- 38: Befestigungsprofil
- 40: Hubprofil
- 42: Hubprofil
- 44: Metallblech
- 45: Hubzylinder
- 46: Metallblech
- 50: Hauptplatte
- 52: Blech
- 54: Rahmen
- 56: Längsprofil
- 58: Querprofil
- 60: Querprofil
- 62: Bohrungen
- 64: Bereich zwischen den Längsprofilen
- 66: Deckblech
- 68: Kabelführungskanäle
- 70: Auffahrhilfe

## Patentansprüche

1. Transportanhänger mit einem Fahrwerk mit mindestens einer Bodenplattform (22), auf die mindestens ein zu transportierender Innenwagen gestellt werden kann, **dadurch gekennzeichnet, dass** die Bodenplattform eine Hauptplatte (46) aus einem porösen metallischen Werkstoff und ein mit der Hauptplatte verbundenes Blech (42, 44) aufweist.

2. Transportanhänger nach Anspruch 1, **dadurch gekennzeichnet, dass** das Fahrwerk einen vorderen und einen hinteren Anhängerabschnitt (16, 18) aufweist.

3. Transportanhänger nach Anspruch 1 oder 2, **dadurch gekennzeichnet, dass** mindestens ein um eine Anhängerlängsachse schwenkbar gelagertes Rampenelement (24, 26) vorgesehen ist, das in einer hochgestellten Position die Bodenplattform seitlich begrenzt und in einer heruntergeklappten Position eine Auffahrrampe für die Bodenplattform bildet.

4. Transportanhänger nach einem der Ansprüche 1 bis 3, **dadurch gekennzeichnet, dass** die Bodenplattform (22) mit der Hauptplatte verbundene Bleche aufweist, zwischen denen die Hauptplatte (46) angeordnet ist.

5. Transportanhänger nach einem der Ansprüche 1 bis 4, **dadurch gekennzeichnet, dass** die Hauptplatte (46) einen geschlossenporigen Aluminiumschaum aufweist.

6. Transportanhänger nach einem der Ansprüche 1 bis 5, **dadurch gekennzeichnet, dass** das Blech oder die Bleche eine Flachseite der Hauptplatte (46) vollständig bedecken.

7. Transportanhänger nach einem der Ansprüche 1 bis 6, **dadurch gekennzeichnet, dass** das Blech aus Stahl oder Aluminium besteht.

8. Transportanhänger nach einem der Ansprüche 1 bis 7, **dadurch gekennzeichnet, dass** die Bodenplattform eine Dicke von weniger als 70 mm, vorzugsweise weniger als 60 mm und besonders bevorzugt weniger als 50 mm aufweist.

9. Transportanhänger nach einem der Ansprüche 1 bis 8, **dadurch gekennzeichnet, dass** in der Bodenplattform eine oder mehrere elektrische und/oder hydraulische Energieleitungen vorgesehen sind, die an den zu den Anhängerabschnitten weisenden Seiten der Bodenplattform Anschlüsse besitzen.

10. Transportanhänger nach einem der Ansprüche 1 bis 9, **dadurch gekennzeichnet, dass** in der Bodenplattform ein oder mehrere Kanäle vorgesehen sind, die an den zu den Anhängerabschnitten weisenden Seiten der Bodenplattform münden.

11. Transportanhänger nach Anspruch 10, **dadurch gekennzeichnet, dass** die Hauptplatte einen Rahmen aus miteinander verbundenen Profilen aufweist, von denen die sich in Längsrichtung zwischen den Anhängerabschnitten erstreckenden Profile als Hohlprofile ausgebildet sind.

12. Transportanhänger nach Anspruch 11, **dadurch gekennzeichnet, dass** der Rahmen mit dem Blech der Hauptplatte verbunden ist und die Profile des Rahmens mehrere Bereiche begrenzen, die mit dem porösen metallischen Werkstoff gefüllt sind.

13. Transportanhänger nach Anspruch 12, **dadurch gekennzeichnet, dass** die Bereiche ausgeschäumt werden.

14. Transportanhänger nach einem der Ansprüche 9 bis 13, **dadurch gekennzeichnet, dass** die Räder an beiden Anhängerabschnitten lenkbar gelagert sind, wobei eine Lenkung an dem vorderen Anhängerabschnitt und an dem hinteren Anhängerabschnitt über die Energieleitung und/oder die Kanäle gekoppelt sind.

## Claims

1. Transport trailer with a chassis having at least one floor platform (22) on which at least one inner carriage which is to be transported can be placed, **characterized in that** the floor platform has a main plate (46) made of a porous metallic material and a sheet metal (42, 44) connected to the main plate.

2. Transport trailer according to claim 1, **characterized in that** the chassis has a front and a rear trailer section (16, 18).

3. Transport trailer according to claim 1 or 2, **characterised in that** at least one ramp element (24, 26) is provided which is mounted pivotably about a longitudinal axis of the trailer and which, in a raised position, laterally bounds the floor platform and, in a folded-down position, forms a drive-on ramp for the floor platform.

4. Transport trailer according to one of claims 1 to 3, **characterized in that** the floor platform (22) has metal sheets connected to the main plate, between which the main plate (46) is arranged.

5. Transport trailer according to one of claims 1 to 4, **characterised in that** the main plate (46) comprises a closed-pore aluminium foam.

6. Transport trailer according to any of claims 1 to 5, **characterised in that** the metal sheet or sheets completely cover a flat side of the main plate (46).

7. Transport trailer according to any of claims 1 to 6, **characterised in that** the metal sheet consists of steel or aluminium.

8. Transport trailer according to one of claims 1 to 7, **characterized in that** the floor platform has a thickness of less than 70 mm, preferably less than 60 mm and particularly preferably less than 50 mm.

9. Transport trailer according to one of claims 1 to 8, **characterised in that** one or more electrical and/or hydraulic power lines are provided in the floor platform and have connections on the sides of the floor platform facing towards the trailer sections.

10. Transport trailers according to one of claims 1 to 9, **characterised in that** one or more channels are provided in the floor platform, which lead to the sides of the floor platform facing the trailer sections.

11. Transport trailer according to claim 10, **characterised in that** the main plate has a frame of interconnected profiles, of which the profiles extending in the longitudinal direction between the trailer sections are formed as hollow profiles.

12. Transport trailer according to claim 11, **characterised in that** the frame is connected to the sheet metal of the main plate and the profiles of the frame define a plurality of regions filled with the porous metallic material.

13. Transport trailer according to claim 12, **characterized in that** the regions are filled with foam.

14. Transport trailer according to one of the claims 9 to 13, **characterised in that** the wheels are mounted steerably on both trailer sections, a steering on the front trailer section and on the rear trailer section being coupled via the power line and/or the channels.

## Revendications

1. Remorque de transport dotée d'un châssis avec au moins une plate-forme de plancher (22), sur laquelle un chariot intérieur à transporter peut être placé, **caractérisée en ce que** la plate-forme de plancher présente une plaque principale (46) à base d'un matériau métallique poreux et une tôle (42, 44) reliée à la plaque principale.

2. Remorque de transport selon la revendication 1, **caractérisée en ce que** le châssis présente une partie de remorque avant et une partie de remorque arrière (16, 18).

3. Remorque de transport selon la revendication 1 ou 2, **caractérisée en ce qu'**au moins un élément de rampe (24, 26) est prévu, monté de manière à pouvoir pivoter autour d'un axe longitudinal de la remorque, qui limite latéralement la plate-forme de plancher dans une position relevée et qui forme une rampe d'accès à la plate-forme de plancher dans une position rabattue.

4. Remorque de transport selon l'une des revendications 1 à 3, **caractérisée en ce que** la plate-forme de plancher (22) présente des tôles reliées à la plaque principale, entre lesquelles la plaque principale (46) est disposée.

5. Remorque de transport selon l'une des revendications 1 à 4, **caractérisée en ce que** la plaque principale (46) est constituée d'une mousse d'aluminium à pores fermés.

6. Remorque de transport selon l'une des revendications 1 à 5, **caractérisée en ce que** la tôle ou les tôles recouvrent complètement une face plane de la plaque principale (46).

7. Remorque de transport selon l'une des revendications 1 à 6, **caractérisée en ce que** la tôle est constituée d'acier ou d'aluminium.

8. Remorque de transport selon l'une des revendications 1 à 7, **caractérisée en ce que** la plate-forme de plancher présente une épaisseur inférieure à 70 mm, de préférence inférieure à 60 mm et encore mieux inférieure à 50 mm.

9. Remorque de transport selon l'une des revendications 1 à 8, **caractérisée en ce qu'**une ou plusieurs conduites d'énergie électrique et/ou hydraulique sont prévues dans la plate-forme de plancher, qui possèdent des connexions sur les côtés de la plate-forme de plancher tournés vers les parties de remorque.

10. Remorque de transport selon l'une des revendications 1 à 9, **caractérisée en ce qu'**un ou plusieurs canaux sont prévus dans la plate-forme de plancher, qui débouchent sur les côtés de la plate-forme de plancher tournés vers les parties de remorque.

11. Remorque de transport selon la revendication 10, **caractérisée en ce que** plaque principale présente un cadre constitué de profilés assemblés les uns aux autres, dont les profilés s'étendant dans l'axe longitudinal entre les parties de remorque sont conçus sous la forme de profilés creux.

12. Remorque de transport selon la revendication 11, **caractérisée en ce que** le cadre est relié à la tôle de la plaque principale et les profilés du cadre limitent plusieurs zones, qui sont remplies avec le matériau métallique poreux.

13. Remorque de transport selon la revendication 12, **caractérisée en ce que** les zones sont remplies de mousse.

14. Remorque de transport selon l'une des revendications 9 à 13, **caractérisée en ce que** les roues sont montées de manière à pouvoir pivoter sur les deux les parties de remorque, dans laquelle une direction est respectivement couplée à la partie de remorque avant et à la partie de remorque arrière au moyen de la conduite d'énergie et/ou des canaux.
